## Europäisches Patentamt

## European Patent Office

## Office européen des brevets

(11) Veröffentlichungsnummer: **0 232 460**
**B1**

## EUROPÄISCHE PATENTSCHRIFT

(45) Veröffentlichungstag der Patentschrift:
28.06.89

(51) Int. Cl.⁴: **A47J 31/46, A47J 31/36,**
**A47J 31/54**

(21) Anmeldenummer: **86113524.2**

(22) Anmeldetag: **01.10.86**

(54) **Maschine zum Zubereiten von Heissgetränken.**

(30) Priorität: **03.02.86 DE 3603186**

(43) Veröffentlichungstag der Anmeldung:
**19.08.87 Patentblatt 87/34**

(45) Bekanntmachung des Hinweises auf die Patenterteilung:
**28.06.89 Patentblatt 89/26**

(84) Benannte Vertragsstaaten:
**AT BE CH DE FR GB IT LI LU NL SE**

(56) Entgegenhaltungen:
**EP-A- 0 073 496**
**BE-A- 545 966**
**DE-B- 1 282 377**
**DE-B- 2 922 446**
**FR-A- 570 521**
**FR-A- 818 729**
**FR-A- 2 299 839**
**FR-A- 2 543 422**
**FR-E- 6 003**

(73) Patentinhaber: **Feldmühle Aktiengesellschaft,**
**Fritz-Vomfelde-Platz 4, D-4000 Düsseldorf 1(DE)**

(72) Erfinder: **Rittel, Hans-Gerd, Max-Eyth-Strasse 53,**
**D-7317 Wendlingen(DE)**
Erfinder: **Keusch, Siegfried, Dipl.-Ing.,**
**Marquardtstrasse 52, D-7310 Plochingen(DE)**

## Beschreibung

Die Erfindung betrifft eine Maschine zum Zubereiten von Heißgetränken, insbesondere von unterschiedlichen Kaffeearten, die durch Brühen unter verschiedenen Drücken erzeugt werden, wobei die Maschine im wesentlichen aus einem Wasserbehälter, einer Druckpumpe, einen Wärmetauscher sowie einem Steuerventil mit Anschlüssen an eine Dampf-, eine Heißwasser- und eine Entlüftungsleitung besteht.

Maschinen der vorgenannten Art sind bekannt und werden, auch wenn sie für die Herstellung der verschiedensten Heißgetränke und auch Suppen eingesetzt werden können wegen der Möglichkeit mit höherem Druck Kaffee aufbrühen zu können im allgemeinen als Espresso-Maschinen bezeichnet. So beschreiben beispielsweise die DE-AS 29 22 446 und die DE-PS 31 33 903 solche Aggregate, bei denen mit mehreren Ventilen gearbeitet wird, um das Herstellen des Heißgetränkes mit Heißwasser oder mit Dampf durchzuführen.

Die Betätigung der verschiedenen Ventile ist jedoch ein erheblicher Aufwand, so daß man auch dazu übergegangen ist, ein Mehrwegeventil einzusetzen, das mit einer einzigen Hebelbewegung in die jeweils erforderliche Position gebracht werden kann, d. h. mit einem Ventil kann sowohl die Heißwasserzufuhr als auch die Dampfzufuhr als auch im Anschluß daran die Entlastung des Brühbehälters auf Normaldruck über eine Entlüftungsleitung erfolgen.

Nachteilig bei diesen Ventilen ist jedoch, daß sich an ihnen sehr leicht Kalk anlagert, was insbesondere bei kleineren Aggregaten auftritt, die nicht serienmäßig mit einem Entkalker ausgerüstet sind. Die Funktion des bzw. der Ventile wird durch die Kalkanlagerung zunächst beeinträchtigt, d. h. der Ventilquerschnitt verengt sich und das Ventil wird schwergängiger. Je nach dem Kalkgehalt des eingesetzten Wassers muß im Laufe eines längeren oder kürzeren Zeitraums das Ventil dann wegen völligen Versagens ausgetauscht werden. Weiter nachteilig sind die Vielzahl an Bauelementen, deren aufwendige Herstellung und Montage sowie der Zusammenbau mit dem Wärmetauscher.

Der Erfindung liegt damit die Aufgabe zugrunde, ein Ventil zu schaffen, das diese Nachteile nicht aufweist, d. h. ein Ventil zu schaffen, an das sich praktisch kein Kalk anlagern kann, dessen Ventilstellungen einfach, definiert und schnell erreicht werden und das Fehlbedienung weitgehend ausschließt sowie eine kostengünstige Herstellung zuläßt.

Mehrwegeventile, die widerstandsfähig gegen Kalk sind, d. h. an die sich Kalk nicht anlagert, sind aus der Sanitärindustrie bekannt, wo, wie z. B. in der DE-PS 12 82 377 beschrieben, Ventile aus gesinterten Hartstoffen als Material eingesetzt werden. Als Hartstoff ist im vorliegenden Fall eine Oxidkeramik auf der Basis von Aluminiumoxid gewählt worden, die aufgrund ihrer Verschließfestigkeit eine lange Einsatzdauer ermöglicht. Nachteilig ist jedoch bei allen Hartstoffen die hohe Thermoschockempfindlichkeit. Temperaturunterschiede, wie sie in der Regel zwischen der normalen Umgebungstemperatur und beispielsweise der Dampftemperatur liegen, werden von Oxidkeramik nicht vertragen, d. h. es bilden sich an den besonders beanspruchten Stellen Risse, die zur Zerstörung des Ventils führen. Der vorliegenden Erfindung liegt damit des weiteren die Aufgabe zugrunde, die Bildung von Rissen und Mikrorissen beim Temperaturwechsel im Ventil zu vermeiden.

Diese Aufgabe wird bei einer Maschine zum Zubereiten von Heißgetränken, insbesondere von unterschiedlichen Kaffeearten, die durch Brühen unter verschiedenen Drücken erzeugt werden, die im wesentlichen aus einem Wasserbehälter, einer Druckpumpe, einem Wärmetauscher sowie einem Steuerventil mit Anschlüssen an eine Dampf-, eine Heißwasser- und eine Entlüftungsleitung besteht, dadurch gelöst, daß das Steuerventil im wesentlichen formschlüssig in den Wärmetauscher integriert ist und aus gesintertem Hartstoff besteht.

Durch die Verwendung von gesintertem Hartstoff als Ventilmaterial, insbesondere durch die Verwendung von Oxidkeramik, die vorzugsweise einen Aluminiumoxidgehalt von über 85 % aufweist, steht ein Material zur Verfügung, das nicht nur hervorragende physikalische Eigenschaften aufweist, die eine lange Lebensdauer erwarten lassen, da dieses Material eine hohe Festigkeit und Härte besitzt und außerdem gut polierfähig ist, so daß die mechanische Anlagerung von Kalk praktisch nicht erfolgen kann, sondern das auch chemische, hervorragende Eigenschaften besitzt, d. h. inert ist und dadurch auch bei der Reinigung von evtl. verwandten Säuren nicht angegriffen werden kann. Eine Kalkablagerung an den dichtenden Elementen des Ventils ist damit praktisch ausgeschlossen.

Durch die Integrierung dieses Ventils, das gemäß einer bevorzugten Ausgestaltung der Erfindung ein Scheibenventil ist, in den Wärmetauscher und seine formschlüssige Verbindung mit dem Wärmetauscher ist sichergestellt, daß keine plötzliche Temperaturänderung eintreten kan, da die größere Masse des Wärmetauschers die Temperatur aller strömenden Medien zunächst anpaßt, ehe sie das Steuerventil passieren. Damit ist sichergestellt, daß keine großen Temperaturunterschiede im Steuerventil auftreten und die Bildung von Rissen und Mikrorissen in den Ventilscheiben sicher verhindert wird. Desweiteren ergibt sich die Möglichkeit, die Baugröße der Maschine erheblich zu reduzieren und durch die Verwendung eines preisgünstigen Materials, wie Aluminiumoxid als Ventilmaterial, die Kosten für eine wesentliche Komponente der Maschine zu senken.

Als weiterer Vorteil ergibt sich, bedingt durch die Einbettung des Scheibenventils in den Wärmetauscher, eine schnelle Montage durch einfaches Einbetten von Dichtelementen samt den Einzelteilen des Scheibenventils, was zu einer weiteren Kostenreduzierung führt.

Die Erfindung wird nachstehend anhand der Zeichnungen beschrieben.

Fig. 1 zeigt in schematischer Darstellung den Aufbau einer Espresso-Maschine,

Fig. 2 einen Teilschnitt durch den Wärmetauscher der Espresso-Maschine,

Fig. 3 eine Draufsicht auf den Wärmetauscher bei abgenommenem Wärmetauscherdeckel,

Fig. 4, 5 und 6 Einzelteile des Ventiles.

Ein auffüllbarer Wasserbehälter (1), der in der nicht näher dargestellten Espresso-Maschine angeordnet ist, steht über eine Saugleitung (2) mit der Pumpe (3) in Verbindung. Die Pumpe (3) wird über nicht näher dargestellte Elektroaggregate angetrieben. Ihre Druckleitung (4) führt in den Heißwasserraum (6), der im Wärmetauscher (5) angeordnet ist. Der Wärmetauscher (5) wird durch die Heizspirale (7) erwärmt, wobei auch hier die Zuleitung und Steuerung des Aufheizens nicht dargestellt ist. Über eine Ausgangsleitung (8) ist der Heißwasserraum (6) mit dem Steuerventil (9) verbunden. Abhängig von der im Heißwasserraum (6) befindlichen Wassermenge und dem dort herrschenden Druck wird die Ausgangsleitung (8) mit Dampf oder Heißwasser beaufschlagt, das durch die Dichtung (18) auf die obere stationäre Dichtscheibe (15) des Ventils (9) trifft und durch die Zentralbohrung (19) der oberen stationären Dichtscheibe (15) in das Steuerlangloch (20) der Steuerscheibe (17) gelangt. Entsprechend der Stellung des Steuerhebels (21), in dessen ringförmiger Ausnehmung (22) die Steuerscheibe (17) gelagert ist, wird der Heißwasserraum (6) über die Entlüftungsbohrung (23), die Dampfbohrung (24) oder die Heißwasserbohrung (25) mit der Entlüftungsleitung (10), der Dampfleitung (11) bzw. der Heißwasserleitung (12) verbunden.

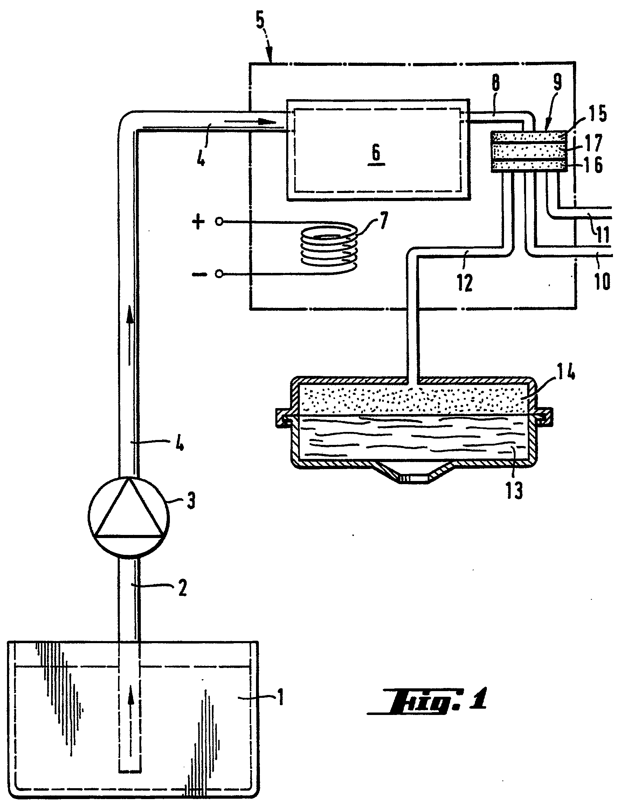

Wie in Fig. 1 schematisch dargestellt, führt die Heißwasserleitung (12) zum Kaffeefilter (13), auf dem der Kaffee als Schicht (14) aufgeschüttet ist.

Die obere stationäre Dichtscheibe (15) ist ebenso wie die untere stationäre Dichtscheibe (16) mit einer Aussparung (26) versehen, in die ein im Wärmetauscher (5) angeordneter Nocken (27) bzw. (27′) eingreift. Der Nocken (27′) befindet sich dabei im Oberteil des Wärmetauschers (5), der Nocken (27) im Unterteil des Wärmetauschers (5). Beide Nocken dienen zur Verdrehsicherung der stationären Dichtscheiben (15) bzw. (16).

Der Steuerhebel (21) besitzt analog zu den Nocken (27) im Wärmetauscher (5) in seiner ringförmigen Ausnehmung (22) zwei Ansätze (28), die zur Verdrehsicherung der Steuerscheibe (17) dienen. Die Steuerscheibe (17) ist zwischen der oberen stationären Dichtscheibe (15) und der unteren stationären Dichtscheibe (16) angeordnet und wird durch die Dichtungen (18) bzw. (18′) an die beiden stationären Dichtscheiben (15) bzw. (16) angedrückt. Die stationären Dichtscheiben (15) und (16) sind lose in das Ober- bzw. Unterteil des Wärmetauschers (5) eingelegt und werden nur durch die Nocken (27) bzw. (27′) gehalten, so daß die Montage sehr einfach ist.

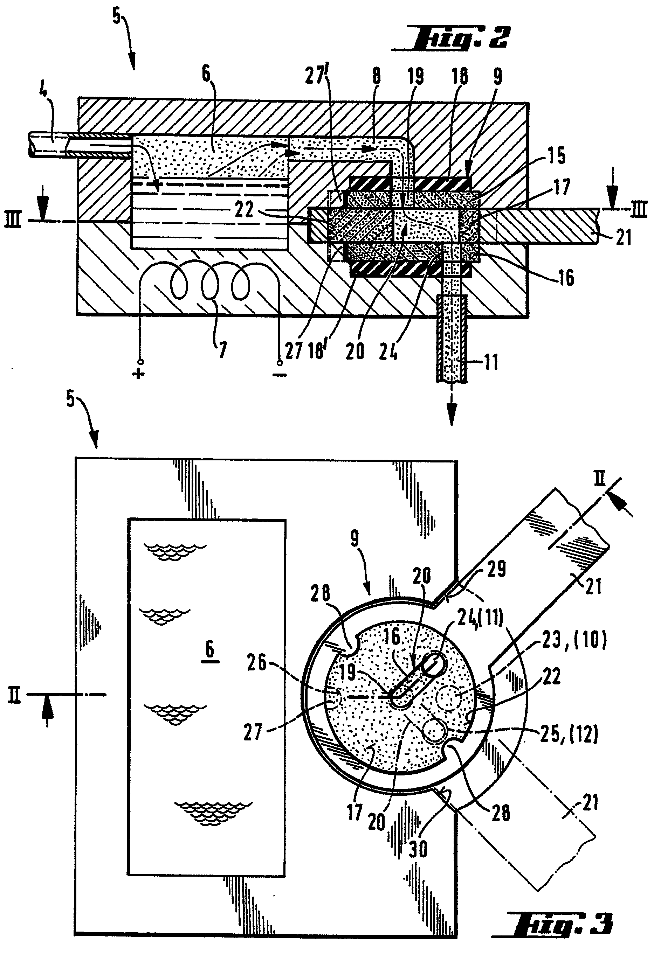

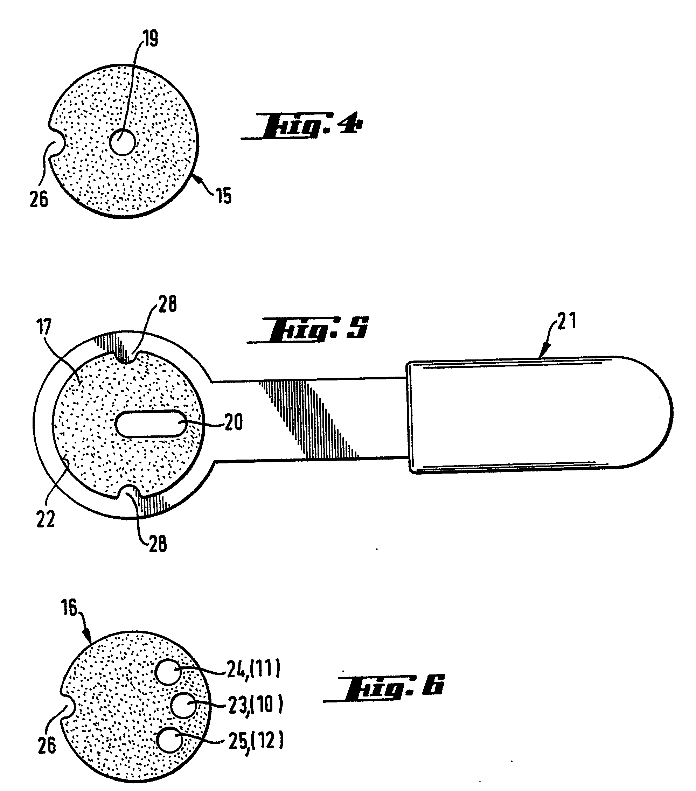

Die Fig. 3 zeigt einen Blick auf die untere Hälfte des Wärmetauschers (5), in die bereits der Steuerhebel (21) eingesetzt ist. Der Steuerhebel (21) steht in der dargestellten Position am hinteren Anschlag (29), wodurch das Steuerlangloch (20) in der Steuerscheibe (17) die Zentralbohrung (19) der oberen stationären Dichtscheibe (15) über die Dampfbohrung (24) mit der Dampfleitung (11) verbindet. Wird der Steuerhebel (21), wie in Fig. 3 gestrichelt dargestellt, zum vorderen Anschlag (30) bewegt, so ist der Heißwasserraum (6) über die Heißwasserbohrung (25) mit dem Kaffeefilter (13) verbunden. In der Mittelstellung, also wenn die Entlüftungsbohrung (23) mit der Entlüftungsleitung (10) verbunden ist, erfolgt das Entspannen des Heißwasserraumes (6).

## Patentansprüche

1. Maschine zum Zubereiten von Heißgetränken, insbesondere von unterschiedlichen Kaffeearten, die durch Brühen unter verschiedenen Drücken erzeugt werden, die im wesentlichen aus einem Wasserbehälter, einer Druckpumpe, einem Wärmetauscher sowie einem Steuerventil mit Anschlüssen an eine Dampf-, eine Heißwasser- und eine Entlüftungsleitung besteht, dadurch gekennzeichnet, daß das Steuerventil (9) im wesentlichen formschlüssig in den Wärmetauscher (5) integriert ist und aus gesintertem Hartstoff besteht.

2. Maschine nach Anspruch 1, dadurch gekennzeichnet, daß das Steuerventil (9) ein Scheibenventil ist.

3. Maschine nach einem der Ansprüche 1 und 2, dadurch gekennzeichnet, daß der gesinterte Hartstoff Oxidkeramik ist.

4. Maschine nach einem der Ansprüche 1 bis 3, dadurch gekennzeichnet, daß der gesinterte Hartstoff Aluminiumoxidkeramik met einem $Al_2O_3$-Gehalt > 85 % ist.

## Claims

1. A machine for the preparation of hot drinks, in particular of different types of coffee, which are produced by a brewing at different pressures, which machine consists essentially of a water tank, a pressure pump, a heat exchanger and also a control valve with connection to a steam duct, a hot water duct and a venting duct, characterized in that the control valve (9) is embedded substantially in positive engagement in the heat-exchanger (5), so that the heat exchanger encloses the control valve, and is made of sintered mechanically resistant material.

2. A machine according to claim 1, characterized in that the control valve (9) is a disc valve.

3. A machine according to one of claims 1 and 2, characterized in that the sintered mechanically resistant material is oxide ceramic material.

4. A machine according to one of claims 1 to 3, characterized in that the sintered mechanically resistant material is aluminium oxide ceramic material with an $Al_2O_3$ content of more than 85%.

## Revendications

1. Machine de préparation de boissons chaudes, en particulier de divers types de café, qui sont produites par infusion à différentes pressions, comprenant pour l'essentiel un réservoir d'eau, une pompe refoulante, un échange de chaleur ainsi qu'une valve de commande avec raccordements à une conduite de vapeur, à une conduite d'eau chaude et à une conduite de mise à l'atmosphère, caractérisée par le fait que la valve de commande (9) est solidement encastrée dans l'échangeur de chaleur (5) de manière que l'échangeur de chaleur entoure la valve de commande, et est réalisée en matériau dur fritté à résistance mécanique élevée.

2. Machine selon la revendication 1, caractérisée par le fait que la valve de commande (9) est une valve en forme de disque.

3. Machine selon l'une des revendications 1 et 2, caractérisée par le fait que le matériau fritté à résistance mécanique élevée est de la céramique oxydée.

4. Machine selon l'une des revendications 1 à 3, caractérisée par le fait que le matériau fritté à résistance mécanique élevée est une céramique oxydée à base d'aluminium ayant une teneur en $Al_2O_3$ > à 85%.

**Fig. 1**

Fig. 2

Fig. 3

Fig. 4

Fig. 5

Fig. 6